# EUROPÄISCHE PATENTANMELDUNG

(11) **EP 3 666 679 A1**
(43) Veröffentlichungstag der Anmeldung: **17.06.2020**
(21) Anmeldenummer: 19215491.2
(22) Anmeldetag: 12.12.2019
(51) Int. Cl.: B65D 57/00, B65D 71/02, B65D 81/05, B65D 85/20, B65D 85/30, B65D 85/62

(54) **GLASKÖRPERLAGE, GLASKÖRPERBÜNDEL SOWIE HERSTELLUNGSVERFAHREN EINER GLASKÖRPERLAGE**

(30) Priorität: 14.12.2018 DE 102018221781
(71) Anmelder: SCHOTT AG, 55122 Mainz (DE)
(72) Erfinder: SPARSCHUH, Georg Helmut, 390007 Vadodara Gujarat (IN)
(74) Vertreter: Blumbach · Zinngrebe Patentanwälte PartG mbB

(57) **Zusammenfassung**

Es wird eine Glaskörperlage (110) mit mindestens zwei zylindrischen Glaskörpern (50) beschrieben, die in einer x-Richtung nebeneinander angeordneten sind und die sich in eine z-Richtung erstrecken. Zwischen den zylindrischen Glaskörpern (50) sind Abstandsmitteln angeordnet, die in z-Richtung längs der zylindrischen Glaskörper (50) in mindestens zwei zueinander beabstandeten Abstandsmittelpositionen (112) vorgesehen sind. Die Abstandsmittel sind fadenförmige Elemente (10, 20, 30), wobei in jeder Position mindestens ein fadenförmiges Element (10, 20, 30) vorgesehen ist.

## Beschreibung

Die Erfindung betrifft eine Glaskörperlage gemäß dem Oberbegriff von Anspruch 1. Die Erfindung betrifft auch ein Glaskörperbündel sowie ein Herstellungsverfahren einer Glaskörperlage.

Bei der Verpackung von Glaskörpern, insbesondere von Glasrohren kommt es im Fertigungsprozess zu Glas-Glas-Berührungen der äußeren Oberflächen. Es beginnt mit der Anordnung der Glasröhren zu Glasrohrlagen und dann zu einem Glasrohrbündel, das mittels Schrumpfkappen an den Enden in einer rechteckigen Form gehalten wird. Die Anordnung erfolgt in der dichtesten Verpackungsmöglichkeit. Bei der zwangsweisen Berührung der Rohroberflächen ergibt sich eine linienförmige Berührung (Berührungslinie). An den Berührungsstellen längs der Berührungslinie können Oberflächenverletzungen bzw. Kratzer entstehen.

Beim Palettieren werden diese Bündel lagenweise gruppiert und auf einer Palette gestapelt. Da Bündel an Bündel gedrückt wird, berühren sich die außenliegenden Glasrohre, wodurch ebenfalls die Gefahr von Oberflächenverletzungen und Kratzern besteht.

Es hat sich gezeigt, dass sich bei dem bisherigen Packverfahren Relativbewegungen von Rohr zu Rohr nicht völlig ausschließen lassen, insbesondere bei ungünstigen Transportbedingungen, wie schlechte Straßen, hoher Seegang bei Seefracht, Turbulenzen bei Luftfracht. In Folge dessen entstehen durch die Reibbewegung Kratzer, die im einfachsten Fall kosmetische Defekte hervorrufen, oftmals das Rohr aber auch unbrauchbar machen und im Extremfall sogar zum Bruch des Rohres führen.

In der ersten Phase von Glas-zu-Glas-Reibung entstehen kleine Mikrorisse, die die Festigkeit des Rohres erheblich herabsetzen. Wenn bei weiter fortschreitender Reibung jetzt noch kleine Glaspartikel freigesetzt werden, entstehen unerwünschte spitze Kontaktpunkte, die ausgerechnet an den schon geschwächten Oberflächen des Rohres ansetzen und zu Bruchausgängen führen.

Ein weiterer Nachteil besteht darin, dass frisch hergestellte Glasoberflächen aufgrund der chemisch aktiven Oberfläche (Reaktion mit der Luftfeuchtigkeit) zum Verkleben neigen. Dieser Effekt wird zwar durch die eingesetzte Beschichtung der Gläser reduziert, kann aber in der Praxis nicht vollständig vermieden werden. Das Verkleben der Rohre kann beim Entpacken zu Mikrorissen in der Oberfläche führen, welche insofern kritisch sind, als sie stark stabilitätsmindernd sind.

Zwischen den einzelnen Glaskörperlagen werden z. B. Kartonzwischenlagen angeordnet, die aber zu Abdrücken auf den Glasrohren führen können. Außerdem trennt die Kartonage in der Regel nicht die Glasrohre innerhalb einer Glasrohrlage. Nach vollständiger Anordnung der Lagen wird die Gesamtpalette noch mit einer Schrumpffolie geschützt und zusammengehalten. Das Gewicht einer Palette liegt im Durchschnitt bei ca. 800 kg.

Beim Lagern und Transportieren bis zur Auslieferung beim Kunden wird die Palette mindestens sechs bis sieben Mal angehoben und abgesetzt. Während dieses Vorgangs bewegen sich die Rohroberflächen der Rohre gegeneinander. Während des Transports zum Kunden ergibt sich durch die Bewegung des Transportmittels eine hohe Wahrscheinlichkeit, dass die Glasrohroberflächen gegeneinander reiben. Die Wahrscheinlichkeit einer Oberflächenbeschädigung der Glasrohre ist hierbei sehr hoch.

Beim Entstapeln der Palette werden die Rohrbündel in umgekehrter Reihenfolge wie beim Verpacken wieder aufgelöst bis hin zum einzelnen Glasrohr, das dann in die Verarbeitungsmaschine, z. B. eine Fläschchenmaschine etc., entweder per Hand oder mittels eines Roboters eingespeist wird. Auch hier kommt es wieder zum unvermeidlichen Kontakt der Rohroberflächen und damit zu Oberflächenverletzungen und Kratzern.

Um das Verkratzen der Glasrohre auf dem Weg bis zum Kunden zu minimieren, werden die Glasrohre häufig oberflächenbeschichtet. Die mehrere Nanometer dicke Schicht bietet aber nur einen Schutz, solange diese Schicht durch die gegenseitige Berührung nicht abgeschabt wird. Häufig führt das trotz Beschichtung zu Oberflächenverletzungen und Kratzern. Eine Oberflächenbeschichtung kann Kratzer nicht verhindern, sondern miniert diese bestenfalls.

Oberflächenverletzungen verursachen mehrere Probleme.

Kratzer an der Oberfläche der Glasrohre durch gegenseitigen Kontakt beim Verpacken, in der Verpackung, auf der Palette, beim Transport und beim Entstapeln der Palette beim Kunden führen zu einer Herabsetzung der visuellen Qualität bis hin zur Nichteinhaltung der geforderten Spezifikation.

Durch die Oberflächenverletzungen wird die Festigkeit des gesamten Glasrohres deutlich herabgesetzt, was dann auch für die daraus gefertigten Pharmabehälter gilt.

Oberflächenverletzungen können zum Bruch in der Palette und damit zur Verunreinigung der angrenzenden Glasrohre oder Rohrbündel führen. Kratzer können zu Fehldetektionen in den optischen Online-Inspektionsgeräten der Abnehmer führen. Sogar in den Abfüllanlagen und Inspektionssystemen der Pharmazeuten werden solche Kratzer erkannt, was zu entsprechenden Reklamationen der Abnehmer führt.

Aus der DE 27 29 966 ist ein Gebinde von Rohren aus sprödem Material, wie Glas oder Glaskeramik bekannt, wobei die Rohre in dichtester Packung und in rechteckiger Anordnung vorliegen und zumindest an den Enden und an den Stirnseiten ausschließlich von einer Schrumpffolie derart umhüllt sind, dass sie in ihrer Lage fixiert werden. Im Gebinde liegen die Rohre aufeinander und können verkratzen.

In der EP 0 132 587 A1 wird zur Verhinderung des Auseinanderrollens des Glasrohrbündels vorgeschlagen, auf jede Rohrlage eine Folie oder Folienbänder zu legen. Anstelle einer Folie können auch die einzelnen Rohre mit einem Antirutschbelag, beispielsweise aus aufgesprühtem Silikon, oder mit aufgeschobenen Ringen aus Polyethylengummi oder Textilmaterial versehen sein.

Die DE 20 121 582 U1 offenbart Schutzkappen, die an beiden Enden eines Glasrohres angebracht sind, um zu verhindern, dass bei Verpackung und Transport die Rohre in Kontakt kommen und Kratzer auf der Oberfläche entstehen. Die Schutzkappen dienen sowohl als Abstandshalter als auch zum Abdichten der offenen Rohre.

Die DE 42 25 876 C2 offenbart eine Packaufnahme für stabförmige Gegenstände, wie Glasrohre und Glasstäbe. Jeweils zwei Streifen aus einem folienartigen Material umschließen nebeneinander angeordnete Glasrohre, wodurch ein vielgliedriger Gurt gebildet wird, der Aufnahmeglieder für den Eingriff jeweils eines Glasrohres aufweist. Die benachbarten Aufnahmeglieder sind über einen zweilagigen Zwischensteg miteinander verbunden. Im Bereich der Zwischenstege sind die beiden Streifen mittels einer Klebe- und/oder Prägenaht miteinander verbunden. Eine Glasrohrlage weist beabstandet zu den Enden der Glasrohre jeweils einen solchen Gurt auf. Übereinandergestapelte Glasrohrlagen berühren sich im Bereich der Gurte.

Die DD 224 555 A1 beschreibt ein Verfahren zum Verpacken von Glasrohren mittels Schrumpffolie, bei dem an den beiden Enden eines Glasrohrpaketes jeweils eine vorgefertigte, rechteckige Folienhülle aus plastischem Material aufgeschoben wird und diese Folienhüllen mit entsprechenden Schrumpfaggregaten geschrumpft werden. Vor dem Aufschieben der vorgefertigten Folienhüllen können die Glasrohrenden ganz oder teilweise mit weiteren Stabilisierungsmitteln umgeben werden.

Die DD 82 301 offenbart eine Verpackung für stoßempfindliche, röhrenförmige Glaskörper. In eine Palette aus Wellpappmaterial werden abstandsgleiche, trapezförmige Lappen eingestanzt, die in entgegengesetzte Aufklapprichtung zueinander versetzt angeordnet und zur Fläche der Palette nach einer Seite aufgerichtet werden. Die aufgerichteten Lappen bilden eine seitliche Begrenzung der Verpackungsgegenstände und verhindern eine seitliche Berührung.

Die JP H09-295686 A offenbart einen Abstandshalter für einen Stapelverbund von Glasrohren. Der Abstandshalter weist halbkreisförmige Ausnehmungen auf, die von Rippen getrennt werden und in denen jeweils ein Glasrohr angeordnet werden kann. Im Gegensatz zu dem in der JP H09-295686 A beschriebenen Stand der Technik können die Glasrohre durch den Abstandshalter mit einem Versatz angeordnet werden, wodurch in dem gleichen Gesamtvolumen mehr Glasrohre angeordnet werden können.

Der Abstandshalter der JP H09-295686 A nimmt viel Platz zwischen den Rohren ein, was dazu führt, dass im Vergleich zu dem Gesamtvolumen des Stapelverbunds nur eine geringe Anzahl von Glasrohren angeordnet werden kann. Gleiches gilt auch für manche der aus der WO 2015/037361 A1 bekannten Abstandshalter. Außerdem ist die Herstellung dieser Art von Abstandshalter aufwändig.

Die WO 2015/037361 A1 offenbart aber auch noch eine andere Möglichkeit eines Abstandshalters. Demnach wird ein bandförmiger Spacer aus Papier oder Pappe zwischen den Glasrohren angeordnet. Der Spacer nimmt dann eine Wellenform an. Auf diese Weise reduziert sich der Abstand zwischen den Glasrohren, sodass in dem gleichen Volumen mehr Glasrohre angeordnet werden können.

Aufgabe der Erfindung ist es, eine Glaskörperlage und ein Glaskörperbündel anzugeben, bei denen Oberflächenverletzungen und Kratzer an Glaskörpern vom Verpacken bis zur Auslieferung beim Kunden auf einfache Weise vermieden werden können. Es ist auch Aufgabe, ein Verfahren zur Herstellung solcher Glaskörperlagen anzugeben.

Diese Aufgabe wird mit einer Glaskörperlage mit den Merkmalen des Patentanspruchs 1 gelöst.

Die Glaskörperlage umfasst mindestens zwei Glaskörper, die in einer x-Richtung nebeneinander angeordnet sind und die sich in eine z-Richtung erstrecken, wobei zwischen den Glaskörpern Abstandsmittel angeordnet sind, die in z-Richtung längs der Glaskörper in mindestens zwei beabstandeten Abstandsmittelpositionen vorgesehen sind, wobei die Abstandsmittel fadenförmige Elemente sind und wobei in jeder Abstandsmittelposition mindestens ein fadenförmiges Element vorgesehen ist.

Vorzugsweise ist zwischen allen Glaskörpern in jeder Abstandsmittelposition mindestens ein gemeinsames fadenförmiges Element angeordnet.

Unter dem Begriff Glas wird auch thermisch behandeltes Glas, insbesondere Glaskeramik verstanden.

Die erwähnten x- und z-Richtungen beziehen sich auf ein orthogonales xyz-Koordinatensystem, das in den Figuren zum besseren Verständnis eingezeichnet ist.

Unter einem "fadenförmigen Element" wird vorzugsweise ein dünnes, aus Fasern oder aus Materialstreifen verdrilltes Gebilde verstanden. Im Rahmen der Erfindung werden unter dem Begriff "fadenförmiges Element" auch Schnüre, Leinen oder Stricke verstanden. Vorzugsweise ist das fadenförmige Element eine Rundschnur, eine Ovalschnur, eine geflochtene Schnur oder eine Schnur z.B. aus verdrillten Folienstreifen. Das fadenförmige Element kann aus einem extrudierten Material gefertigt sein.

Das Material der Abstandsmittel wird vorzugsweise derart gewählt, dass es nicht zur Kontamination der Glasoberfläche durch Belagsbildung oder Abrieb kommt. Gleichzeitig sollte das Material und die Formgebung der Abstandsmittel auch derart gewählt werden, dass die Herstellung so kostengünstig als möglich ist.

Ohne die Abstandsmittel entstehen längs der sich in z-Richtung erstreckenden Berührungslinie der nebeneinander angeordneten Glaskörper Oberflächenverletzungen und Kratzer an Außenflächen der Glaskörper. Diese Oberflächenverletzungen und Kratzer werden durch die Abstandsmittel vermieden.

"Zwischen den Glaskörpern" bedeutet, dass die Abstandsmittel mindestens in der Berührungslinie der Glaskörperoberflächen von nebeneinander angeordneten Glaskörpern angeordnet sind.

Die fadenförmigen Elemente halten die Glaskörper einer Glaskörperlage auf Abstand. Die Fadenspannung ist derart zu wählen, dass die Glaskörperlage, die bis zu 30 Glaskörper umfassen kann, soweit stabilisiert wird, dass die Glaskörperlage handhabbar ist und mit weiteren Glaskörperlagen zu einem Glaskörperbündel gestapelt werden kann.

Ein Glaskörperbündel kann bis zu 30 Glaskörperlagen aufweisen. Für das Glaskörperbündel müssen die fadenförmigen Elemente keine Halte- oder Stabilisierungsfunktion aufweisen, da die notwendige Stabilität des Glaskörperbündels vorzugsweise durch die an den Enden des Glaskörperbündels vorgesehenen Umhüllungen erreicht wird, z.B. durch aufgebrachte Hauben, die z.B. aus Schrumpffolie bestehen können.

Unter "umschlingen" wird vorzugsweise ein Umgreifen des Außenumfangs des Glaskörpers verstanden, wobei das fadenförmige Element vorzugsweise auch am Außenumfang des Glaskörpers zumindest teilweise anliegt. Unter dem Begriff "mindestens teilweise umschlingen" wird vorzugsweise ein Anliegen des Fadens an mindestens einem Außenumfangsabschnitt des Glaskörpers verstanden.

Vorzugsweise kontaktiert das fadenförmige Element 40% bis 80% des Außenumfangs jedes Glaskörpers. Besonders bevorzugt kontaktiert das fadenförmige Element mindestens den halben Außenumfang jedes Glaskörpers.

Die Verwendung von fadenförmigen Elementen hat den Vorteil, dass auf vorgefertigte Abstandsmittel, die zwischen den Glaskörpern und/oder Glaskörperlagen angeordnet werden müssen, verzichtet werden kann. Es entfallen der Rücktransport der vorgefertigten Abstandsmittel vom Kunden zum Hersteller bzw. die Entsorgung der vorgefertigten Abstandsmittel nach dem Entpacken der Glaskörperbündel.

Zwar müssen auch die fadenförmigen Elemente entsorgt bzw. recycelt werden, jedoch ist das zu entsorgende Fadenvolumen sehr gering.

Es hat sich gezeigt, dass trotz der sehr geringen Auflageflächen der Fäden der Bruch oder die Beschädigung der Glaskörper sicher ausgeschlossen werden konnte.

Die Ableitung der über der jeweiligen Glaskörperlage aufgebauten Last durch weitere Glaskörperlagen erfolgt ausschließlich an den Auflagepunkten der fadenförmigen Elemente.

Ein weiterer Vorteil der fadenförmigen Elemente besteht darin, dass die Herstellung von Glaskörperlagen automatisiert werden kann und dass das Entpacken der Glaskörperlagen vereinfacht wird.

Vorzugsweise sind in jeder Abstandsmittelposition zwischen jeweils zwei benachbarten Glaskörpern jeweils zwei Fadenabschnitte angeordnet. Die zwei Fadenabschnitte sind Abschnitte eines fadenförmigen Elements.

Vorzugsweise umschlingt das fadenförmige Element mindestens einen Glaskörper, insbesondere alle Glaskörper der Glaskörperlage jeweils mindestens teilweise.

Gemäß einer ersten Ausführungsform ist in jeder Abstandsmittelposition ein fadenförmiges Element vorgesehen.

Die zwei Fadenabschnitte sind vorzugsweise Abschnitte des einen fadenförmigen Elements, insbesondere Schlaufenabschnitte des einen fadenförmigen Elements.

Das - einzige - fadenförmige Element ist in jeder Abstandsmittelposition derart angeordnet, dass es alle Glaskörper an der gleichen Außenumfangsfläche umschlingt und dort Umschlingungen bildet und dass zwischen zwei benachbarten Glaskörpern jeweils eine Schlaufe vorgesehen ist.

Es handelt sich hierbei in jeder Abstandsmittelposition um eine Aneinanderreihung von U-förmigen Umschlingungen, die sich mit Schlaufen abwechseln.

Bei einer in der xz-Ebene liegenden Glaskörperlage umschließt das fadenförmige Element in der jeweiligen Abstandsmittelposition alle Glaskörper nur oben und bildet somit nur obere Umschlingungen oder nur unten und bildet somit nur untere Umschlingungen, wobei in beiden Fällen zwischen den benachbarten Glaskörpern der Glaskörperlage jeweils eine Schlaufe vorhanden ist.

Diese Ausführungsform hat den Vorteil, dass trotz Verwendung von nur einem fadenförmigen Element in jeder der Abstandsmittelpositionen die benachbarten Glaskörper über zwei Fadenabschnitte getrennt sind. Es gibt somit zwischen den benachbarten Glaskörpern in den Abstandsmittelpositionen zwei Auflagepunkte. Da sich die auftretenden Kräfte auf jeweils zwei Fadenabschnitte und damit zwei Auflagepunkte verteilen, kann das Fadenmaterial z. B. dünner oder auch elastischer ausgeführt sein, im Vergleich zur Verwendung nur eines einzigen Fadenabschnittes.

Vorzugsweise erstreckt sich die Schlaufe in y-Richtung über eine Linie L hinaus, welche die Mittelpunkte der Glaskörper verbindet.

Vorzugsweise weist die Schlaufe einen ersten aufragenden Schlaufenabschnitt und einen zweiten aufragenden Schlaufenabschnitt auf, die über einen dritten Schlaufenabschnitt miteinander verbunden sind.

Vorzugsweise sind die ersten und die zweiten Schlaufenabschnitte in z-Richtung versetzt angeordnet.

Vorzugsweise weist das fadenförmige Element ein erstes Ende und ein zweites Ende auf, wobei die Enden jeweils über einen Verbindungsabschnitt mit der jeweils letzten Umschlingung verbunden sind.

Die Länge der Verbindungsabschnitte kann derart gewählt werden, dass die Enden der fadenförmigen Elemente in x-Richtung gegenüber dem Glaskörper vorstehen.

Gemäß einer weiteren Ausführungsform ist vorgesehen, dass die Verbindungsabschnitte auf der Oberseite der Glaskörperlage abgelegt sind und sich in x-Richtung über die Glaskörperlage erstrecken. Vorzugsweise erstrecken sich die Verbindungsabschnitte über die gesamte Breite der Glaskörperlage, was den Vorteil hat, dass die Enden gegenüber der Glaskörperlage vorstehen können. Diese Ausführung hat den Vorteil, dass die Glaskörper in einem Glaskörperbündel in x-Richtung stabilisiert werden.

Gemäß einer zweiten Ausführungsform sind in jeder Abstandsmittelposition ein erstes fadenförmiges Element und ein zweites fadenförmiges Element vorgesehen.

Vorzugsweise sind die zwei Fadenabschnitte zwischen zwei benachbarten Glaskörpern in jeder Abstandsmittelposition Abschnitte vom ersten fadenförmigen Element und vom zweiten fadenförmigen Element.

Vorzugsweise umschlingt jedes der beiden fadenförmigen Elemente alle Glaskörper abwechselnd oben und unten.

Es handelt sich um eine Aneinanderreihung von U-förmigen Umschlingungen, wobei sich für jedes fadenförmige Element obere und untere Umschlingungen abwechseln. Hierbei sind die oberen und unteren Umschlingungen des einen fadenförmigen Elements versetzt zu den oberen und unteren Umschlingungen des zweiten fadenförmigen Elementes angeordnet.

Vorzugsweise sind die Glaskörper alternierend vom ersten fadenförmigen Element oben umschlungen, wodurch obere Umschlingungen gebildet werden und vom zweiten fadenförmigen Element unten umschlungen sind, wodurch untere Umschlingungen gebildet werden, und vom ersten fadenförmigen Element unten umschlungen sind, wodurch untere Umschlingungen gebildet werden, und vom zweiten fadenförmigen Element oben umschlungen sind, wodurch obere Umschlingungen gebildet werden.

Jedes fadenförmige Element weist vorzugsweise ein erstes Ende und ein zweites Ende auf, die vorzugsweise auf der Glaskörperlage abgelegt werden können. Gemäß einer bevorzugten Ausführungsform sind die ersten Enden und die zweiten Enden jeweils miteinander verbunden.

Vorzugsweise sind die Enden mittels thermischem Verschweißen, Verkleben oder mechanischer Verbindungsmittel miteinander verbunden. Mechanische Verbindungsmittel können Clipse oder Knoten sein.

Vorzugsweise beträgt die Materialstärke (oder Fadenstärke) S des fadenförmigen Elementes 0,25 mm ≤ S ≤ 2,5 mm, insbesondere 1,5 mm ≤ S ≤ 2,5 mm, bevorzugt 0,25 mm ≤ S ≤ 1,25 mm, besonders bevorzugt 0,5 mm ≤ S ≤ 1 mm. Insbesondere kann das fadenförmige Element eine Materialstärke S von wenigstens 0,5 mm aufweisen, oder eine Materialstärke S von wenigstens 4,0 mm.

Beispielsweise kann das fadenförmige Element eine Materialstärke zwischen wenigstens 0,25 mm und mindestens 2,5 mm aufweisen, insbesondere von mindestens 1,5 mm bis höchstens 2,5 mm, vorzugsweise von mindestens 0,25 mm bis höchstens 1,25 mm, vorzugsweise höchstens 1,0 mm.

Es ist aber auch möglich, dass die Materialstärke des fadenförmigen Elements 0,1 mm beträgt, oder 0,2 mm, oder 0,3 mm, oder 0,4 mm, oder 0,5 mm, oder 0,6 mm, oder 0,7 mm, oder 0,8 mm, oder 0,9 mm, oder 1,05 mm, oder 1,1 mm, oder etwa 1,5 mm.

Die Materialstärke des fadenförmigen Elements kann beispielsweise bestimmt werden in Übereinstimmung mit oder in Anlehnung an die Projektionsmikroskop-Methode, beispielsweise beschrieben in DIN EN ISO 137.

Das fadenförmige Element besteht vorzugsweise aus einem Kunststoffmaterial. Bevorzugt sind elastische Kunststoffmaterialien, die die Abstandshalter in die Lage versetzen, Schwingungen der Glaskörper, die beim Transport von Glaskörperlagen und Glaskörperbündeln auftreten, abzufedern. Die Bruchgefahr der Glaskörper wird dadurch weiter reduziert. Vorzugsweise weist das Kunststoffmaterial Polypropylen (PP), Polyethylen, insbesondere hochdichtes Polyethylen (HDPE), Polyethylenwachs, Polyamid (PA), Styrol-Acrylnitril-Copolymer (SAN), Polyester, Polyethylenterephthalat (PET), Polybutylenterephthalat (PBT), Polyurethan (PU), Acrylnitril-Butadien-Styrol-Copolymer (ABS), Polyetheretherketon (PEEK) und/oder Polycarbonat (PC) auf oder das Kunststoffmaterial besteht aus dem/den jeweils genannten Polymer/Polymeren.

Insbesondere kann das fadenförmige Element umfassen Polypropylen (PP), Polyethylen, insbesondere hochdichtes Polyethylen (HDPE), Polyethylenwachs, Polyamid (PA), Styrol-Acrylnitril-Copolymer (SAN), Polyester, Polyethylenterephthalat (PET), Polybutylenterephthalat (PBT), Polyurethan (PU), Acrylnitril-Butadien-Styrol-Copolymer (ABS), Polyetheretherketon (PEEK) und/oder Polycarbonat (PC) oder das fadenförmige Element kann bestehen aus Polypropylen (PP), Polyethylen, insbesondere hochdichtes Polyethylen (HDPE), Polyethylenwachs, Polyamid (PA), Styrol-Acrylnitril-Copolymer (SAN), Polyester, Polyethylenterephthalat (PET), Polybutylenterephthalat (PBT), Polyurethan (PU), Acrylnitril-Butadien-Styrol-Copolymer (ABS), Polyetheretherketon (PEEK) und/oder Polycarbonat (PC).

Vorzugsweise sind die Glaskörper Glasrohre und/oder Glasstäbe.

Als Glaskörper können Glasrohre und/oder Glasstäbe in einer Glaskörperlage angeordnet sein. Glasstäbe bestehen im Gegensatz zu Glasrohren aus Vollmaterial.

Vorzugsweise sind die Glaskörper zylindrisch.

Die Abstandsmittelpositionen sind vorzugsweise in Abständen A₁, A₂ mit Werten zwischen 20 cm und 80 cm angeordnet, insbesondere zwischen 40 cm und 60 cm. Die Länge der Glaskörper beträgt vorzugsweise 1 bis 4 m, insbesondere 1 m bis 2 m, so dass vorzugsweise 4 bis 10 Abstandsmittelpositionen vorgesehen sind und dementsprechend eine entsprechende Anzahl von fadenförmigen Elementen benötigt werden. Die Durchmesser der Glaskörper liegen vorzugsweise im Bereich von 5 mm bis 40 mm.

Die Abstandsmittelpositionen können insbesondere liegen zwischen mindestens 20 cm und höchstens 90 cm.

Sofern im Rahmen der vorliegenden Offenbarung auf den Durchmesser eines Glaskörpers, beispielsweise eines Glasrohrs, Bezug genommen wird, handelt es sich dabei um den Außendurchmesser des Glaskörpers. Der Außendurchmesser kann betragen zwischen 6 mm und 50 mm, je nach dem adressierten Endprodukt.

Beispielsweise kann der Außendurchmesser sein 6,85 mm, 8, 15 mm, 10,85 mm, 14,45 mm, 17,05 mm oder 22,05 mm, insbesondere für ein Glasrohr für einen Spritzenkörper als adressiertes Endprodukt, oder 8,65 mm, 10,85 mm, 10,95 mm, 11,60 mm, 14,00 mm, 14,45 mm oder 18,25 mm, insbesondere für sogenanntes Karpulenrohr, oder liegen zwischen 6,8mm und 8,9 mm, oder zwischen 9,0 mm und 14,9 mm, oder zwischen 15,0 mm und 17,9 mm, oder zwischen 18,0 mm und 19,9 mm, oder zwischen 20,0 mm und 24,9 mm, oder zwischen 25,0 und 30,9 mm, oder zwischen 31,0 mm und 34,9 mm, oder zwischen 35,0 mm und 42,9 mm, oder zwischen 43,0 mm und 50,0 mm, insbesondere für Glasrohr für Fläschchen als adressierte Endprodukte, oder zwischen 9,0 mm und 14,9 mm, oder zwischen 15,0 und 17,9 mm, oder zwischen 18,0 mm und 19,9 mm, oder zwischen 20,0 mm und 24,9 mm, insbesondere für Glasrohr für Ampullen als adressierte Endprodukte.

Im Rahmen der vorliegenden Offenbarung wird unter dem Außendurchmesser verstanden der maximale Abstand von zwei Punkten auf der Außenoberfläche des Glaskörpers, beispielsweise von zwei Punkten auf der Außenoberfläche eines Glasrohrs, in einer Querschnittsansicht.

Ein Glaskörper kann insbesondere mit einem runden Querschnitt vorliegen. Dabei wird ein Glaskörper als rund im Rahmen der Messgenauigkeit bezeichnet, wenn sein Rundheitsfehler nicht größer ist als ein bestimmter Wert. Der Rundheitsfehler ist hierbei ein Maß für die Abweichung des Glaskörperquerschnitts insbesondere in einer Richtung senkrecht zur Länge des Glaskörpers von der idealen Form eines Kreises. Die Umfangslinie jedes Querschnitts des Prüflings, also des zu testenden Glaskörpers, muss sich zwischen zwei in derselben Ebene liegenden konzentrischen Kreisen befinden, die den Abstand t zueinander aufweisen. Ein Glaskörper wird also als rund bezeichnet, wenn sein Rundheitsfehler einen Wert kleiner oder gleich t aufweist. Der Rundheitsfehler ergibt sich rechnerisch aus der Hälfte der maximalen Außendurchmesserdifferenz in einer Messebene. In der Praxis wird häufig der Begriff der Ovalität gebraucht, welcher die Differenz aus maximalem und minimalen Außendurchmesser in einer Messebene ist, also die maximalen Außendurchmesserdifferenz. Die Ovalität ist mithin doppelt so hoch wie der Rundheitsfehlerwert.

Vorzugsweise weist das Glaskörperbündel 5 bis 30 Glaskörperlagen auf.

Die fadenförmigen Elemente bilden vorzugsweise auch die Abstandsmittel zwischen den Glaskörpern benachbarter Glaskörperlagen.

Glaskörper, wie z. B. Glasrohre weisen produktionsbedingt eine Krümmung auf, die von Hersteller zu Hersteller verschieden sein kann. Jeder Hersteller gibt für seine Produkte in seinen technischen Lieferbedingungen einen maximalen Wert der Krümmung an. Die Krümmung ist ein produktspezifischer Parameter, der für das jeweilige Produkt bekannt ist. Die Krümmung liegt für die genannten Glasrohrlängen typischerweise im Bereich von 0,5 mm bis 1,5 mm. Unter Berücksichtigung dieser bekannten Größe sollten die Abstände und die Fadenstärke S so gewählt werden, dass sich die Glaskörper z. B. beim Nebeneinanderanordnen oder Aufeinanderstapeln trotz vorhandener Krümmung nicht berühren können.

Es ist von Vorteil, wenn zusätzlich zur Krümmung ein Sicherheitsabstand berücksichtigt wird.

Der Sicherheitsabstand dient dazu, dass sich die zylindrischen Glaskörper auch dann nicht berühren, wenn z. B. beim Transport Schwingungen der zylindrischen Glaskörper auftreten sollten. Das Schwingungsverhalten der zylindrischen Glaskörper kann z. B. durch Schwingungsversuche an den betreffenden Glaskörpern ermittelt werden, so dass diese Erkenntnisse bei der Wahl der Fadenstärke S und der Abstände A berücksichtigt werden können.

Allgemein gilt, je größer der Abstand A gewählt wird, desto größer sollte auch die Fadenstärke S gewählt werden.

Eine zu große Fadenstärke S, d. h. eine Fadenstärke S > 2,5 mm, verringert in einer Glaskörperlage oder einem Glaskörperbündel, in dem sich eine Vielzahl von Glaskörpern befinden, das für die Glaskörper zur Verfügung stehende Volumen in einem Glaskörperbündel.

Das erfindungsgemäße Glaskörperbündel weist mindestens zwei in y-Richtung übereinander angeordnete Glaskörperlagen auf, wobei die Glaskörperlagen derart angeordnet sind, dass die Glaskörper in dichtester Packung angeordnet sind.

Die Glaskörperlagen sind versetzt übereinander angeordnet. Die Anordnung ist nicht nur raumsparend, sondern verleiht dem Glaskörperbündel auch eine verbesserte Stabilität.

Vorzugsweise weist das Glaskörperbündel mindestens an den Enden eine Umhüllung auf. Die Enden des Glaskörperbündels befinden sich dort, wo sich die Enden der Glaskörper befinden. Vorzugsweise werden bei Glasrohren auch die Öffnungen mittels der Umhüllung verschlossen, so dass der Innenraum der Glasrohre, z. B. während des Transports, nicht verunreinigt wird. Diese Umhüllung kann beispielsweise aus einer Schrumpffolie bestehen.

Die Aufgabe wird auch mit einem Verpackungsverfahren gelöst.

Gemäß einer ersten Ausführungsform umfasst das Verfahren zur Herstellung einer Glaskörperlage mit mindestens zwei Glaskörpern, die in einer x-Richtung nebeneinander angeordnet sind und die sich in eine z-Richtung erstrecken, folgende Schritte in folgender Reihenfolge:
a) Bereitstellen von mindestens zwei Glaskörpern,
b) kontinuierliches Zuführen der Glaskörper und Vereinzeln der Glaskörper in einer Vereinzelungsstation,
c) kontinuierliches Zuführen von jeweils einem fadenförmigen Element an mindestens zwei vorgegebenen Abstandsmittelpositionen zu dem vereinzelten Glaskörper,
d) Umschlingung des vereinzelten Glaskörpers an den vorgegebenen Abstandsmittelpositionen mit den fadenförmigen Elementen unter Ausbildung von Schlaufen zwischen den vereinzelten Glaskörpern,
e) Abtrennen der fadenförmigen Elemente nach dem Umschlingen des letzten Glaskörpers einer Glaskörperlage,
f) Verarbeitung der Enden der fadenförmigen Elemente,
g) Abtransport der Glaskörperlage.

Gemäß einer weiteren Ausführungsform umfasst das Verfahren zur Herstellung einer Glaskörperlage mit mindestens zwei Glaskörpern, die in einer x-Richtung nebeneinander angeordnet sind und die sich in eine z-Richtung erstrecken, folgende Schritte:
a) Bereitstellen von mindestens zwei Glaskörpern,
b) kontinuierliches Zuführen der Glaskörper und Vereinzeln der Glaskörper in einer Vereinzelungsstation,
c) kontinuierliches Zuführen von jeweils einem ersten fadenförmigen Element und einem zweiten fadenförmigen Element an mindestens zwei vorgegebenen Abstandsmittelpositionen zu dem vereinzelten Glaskörper,
d) alternierendes Umschlingen der Glaskörper in den Abstandsmittelpositionen mittels der jeweils ersten und zweiten fadenförmigen Elemente,
e) Abtrennen der fadenförmigen Elemente nach dem Umschlingen des letzten Glaskörpers einer Glaskörperlage,
f) Verarbeitung der Enden der fadenförmigen Elemente und
g) Abtransport der Glaskörperlage.

Beide Verfahren werden vorzugsweise derart durchgeführt, dass nacheinander mindestens zwei Glaskörperlagen, insbesondere eine Mehrzahl von Glaskörperlagen kontinuierlich hergestellt und verpackt werden.
Es besteht auch die Möglichkeit, die Verfahren ohne die Verfahrensschritte e und f durchzuführen. In diesem Fall bleiben die Glaskörperlagen verbunden und bilden ein Lagenband aus Glaskörperlagen. Zur Herstellung eines Glaskörperbündels müssen die Glaskörperlagen nicht einzeln aufeinandergelegt werden, sondern können z. B. in einem Container kontinuierlich abgelegt werden. Hierzu wird das Lagenband im Container alternierend gefaltet, so dass die Glaskörperlagen aufeinanderliegen.

Die vorliegende Offenbarung betrifft daher auch ein Glaskörperbündel, umfassend mindestens zwei Glaskörperlagen, insbesondere Glaskörperlagen nach Ausführungsformen der vorliegenden Anmeldung und/oder Glaskörperlagen, die in einem Packverfahren nach Ausführungsformen nach der vorliegenden Schrift hergestellt werden oder herstellbar sind.

Beispielhafte Ausführungsformen der Erfindung werden nachfolgend anhand der Zeichnungen erläutert.

Es zeigen:
- Figur 1: eine perspektivische Darstellung eines Glaskörperbündels mit mehreren Glaskörperlagen,
- Figur 2: die Draufsicht auf eine Glaskörperlage,
- Figur 3: eine Glaskörperlage gemäß einer ersten Ausführungsform in perspektivischer Darstellung,
- Figur 4: einen vergrößerten Ausschnitt der in Figur 3 gezeigten Glaskörperlage in Draufsicht,
- Figur 5a: eine Draufsicht auf die Stirnseiten von drei Glaskörperlagen,
- Figur 5b: eine Draufsicht auf die Stirnseite eines Glaskörperbündels mit Glaskörperlagen gemäß Figur 5a,
- Figur 6: eine Draufsicht auf ein Glaskörperbündel,
- Figur 7: eine schematische Seitenansicht einer Verpackungsvorrichtung zur Erläuterung des Verfahrens zur Herstellung von Glaskörperlagen gemäß der Figuren 1 bis 6,
- Figur 8: eine Glaskörperlage gemäß einer zweiten Ausführungsform in perspektivischer Darstellung,
- Figur 9: eine Draufsicht auf ein Glaskörperbündel,
- Figur 10a: eine Draufsicht auf eine Stirnseite eines Glaskörperbündels,
- Figur 10b: einen Ausschnitt einer Draufsicht in x-Richtung auf das in Figur 10a gezeigte Glaskörperbündel,
- Figur 11: eine schematische perspektivische Ansicht auf einen Webrahmen einer Verpackungsvorrichtung zur Erläuterung der Verfahrensschritte zur Herstellung von Glaskörperlagen gemäß der Figuren 8 bis 10b,
- Figur 12: eine schematische Seitenansicht einer Verpackungsvorrichtung zur Erläuterung der Verfahrensschritte zur Herstellung von Glaskörperlagen gemäß der Figuren 8 bis 10b, und
- Figur 13: die Herstellung eines Glaskörperbündels mittels zusammenhängender Glaskörperlagen.

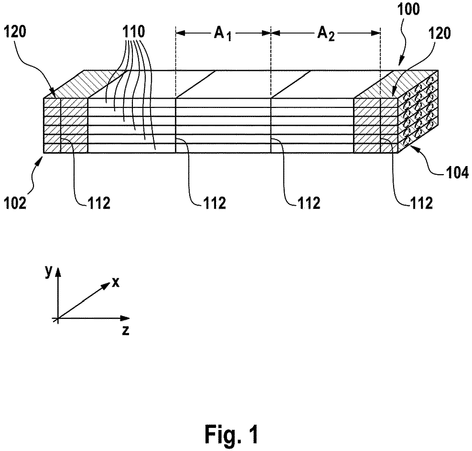

In der Figur 1 ist schematisch ein Glaskörperbündel 100 perspektivisch dargestellt, das sechs Glaskörperlagen 110 aufweist. Die Glaskörperlagen 110 liegen in einer x-z-Ebene, wobei die Glaskörper 50 sich in z-Richtung erstrecken und in x-Richtung nebeneinander angeordnet sind. Die Glaskörperlagen 110 sind in y-Richtung übereinandergestapelt.

Jede Glaskörperlage 110 weist vier Abstandsmittelpositionen 112 auf, die in einem Abstand A angeordnet sind. In der hier gezeigten Ausführungsform sind zwei unterschiedliche Abstände A1 und A2 vorgesehen.

An den Enden 102, 104 des Glaskörperbündels 100 ist jeweils eine Umhüllung 120, z. B. aus einer Schrumpffolie, angeordnet, die sich über einen Endabschnitt der Glaskörperlage 110 und somit über Endabschnitte der Glaskörper 50 erstreckt und die Stirnseiten des Glaskörperbündels 100 abdeckt. Da es sich in der hier gezeigten Ausführungsform um Glasrohre handelt, werden durch die Umhüllung 120 auch die Rohröffnungen abgedeckt, sodass die Innenräume der Glasrohre vor Verschmutzungen geschützt sind.

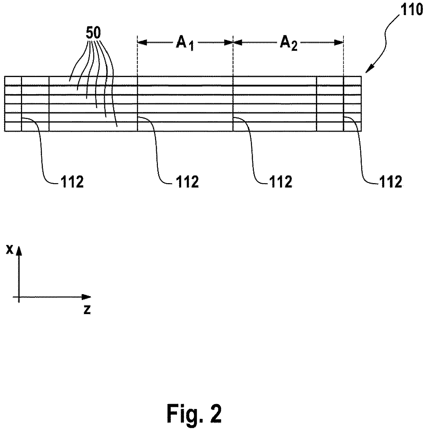

In der Figur 2 ist eine Draufsicht auf eine Glaskörperlage 110 dargestellt, die sechs Glaskörper 50 umfasst.

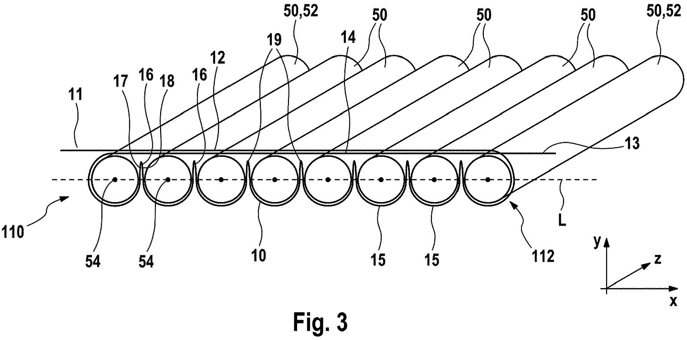

Figur 3 zeigt eine Glaskörperlage 110 gemäß einer ersten Ausführungsform. Die Glaskörperlage 110 weist acht in x-Richtung nebeneinander angeordnete zylindrische Glaskörper 50 auf, deren Mittelpunkte 54 auf einer Linie L angeordnet sind, die sich parallel zur x-Achse erstreckt. In einer beispielhaft dargestellten Abstandsmittelposition 112 ist als Abstandsmittel ein fadenförmiges Element oder Faden 10 vorgesehen, das alle Glaskörper 50 an deren Unterseite umschlingt. Diese unteren Umschlingungen 15 kontaktieren die Außenumfangsfläche der Glaskörper 50 und erstrecken sich über den halben Umfang der Außenumfangsfläche der Glaskörper 50. Die beiden rechts und links außenliegenden Glaskörper 52 werden vom fadenförmigen Element 10 zu etwa 75% umschlungen.

Der Faden 10 weist ein erstes Ende 11 und ein zweites Ende 13 auf. Diese Enden 11, 13 sind über erste und zweite Verbindungsabschnitte 12 und 14 mit den Umschlingungen 15 der beiden Glaskörper 52 verbunden. Die Verbindungsabschnitte 12 und 14 liegen auf der Oberseite der Glaskörperlage 110 auf. Die Enden 11 und 13 stehen in dieser Ausführungsform in x-Richtung gegenüber der Glaskörperlage 110 nach außen vor oder können außen herabhängen, was das Erfassen der Fäden 10 beim Entpacken der Glaskörper 50 erleichtert.

Zwischen den Glaskörpern 50 befinden sich Schlaufen 16, die sich in y-Richtung von den Umschlingungen 15 bis über die Linie L nach oben erstrecken. Jede Schlaufe 16 weist einen ersten und zweiten Schlaufenabschnitt 17, 18 auf, die nach oben aufragen. Die beiden Schlaufenabschnitte 17 und 18 sind über einen dritten Schlaufenabschnitt 19 miteinander verbunden. In der Knotenkunde wird eine derartige Schlaufe 16 als Bucht bezeichnet, wobei die Schlaufenabschnitte 17, 18 die Beine der Bucht bilden.

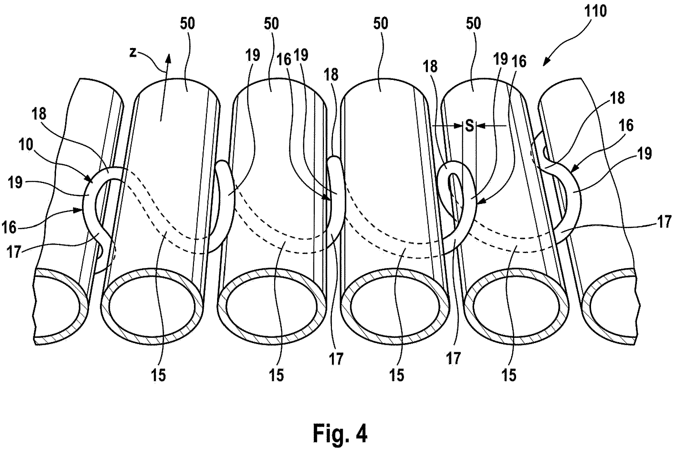

In der Figur 4 ist eine Draufsicht auf die in Figur 3 gezeigte Glaskörperlage 110 dargestellt. Die Schlaufen 16 sind derart angeordnet, dass die ersten und zweiten Schlaufenabschnitte 17, 18 in z-Richtung nebeneinander angeordnet sind. Der Schlaufenabschnitt 19 liegt in einem Freiraum zwischen den Glaskörpern 50 und nimmt an der gegenseitigen Abstützung der Glaskörper 50 nicht teil. Diese Anordnung hat den Vorteil, dass zwischen den Glaskörpern 50 jeweils zwei Schlaufenabschnitte 17, 18 zur gegenseitigen Abstützung vorgesehen sind, so dass der Abstand der benachbarten Glaskörper 50 nur durch die Fadenstärke S bestimmt wird.

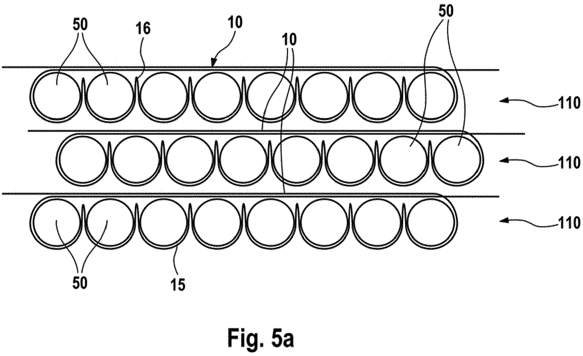

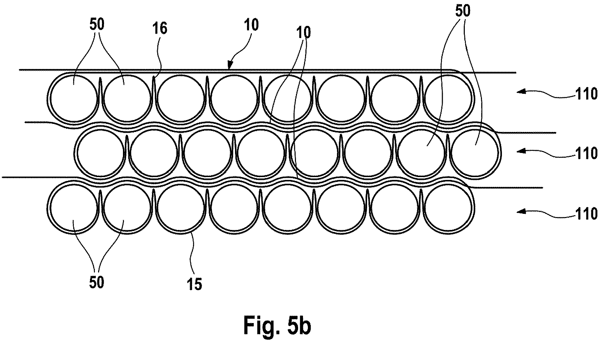

In der Figur 5a ist eine Draufsicht auf die Stirnseiten von drei übereinander angeordneten, aber noch nicht aufeinanderliegenden Glaskörperlagen 110 dargestellt, um die versetzte Anordnung der Glaskörper 50 zu erläutern. Die Glaskörperlagen 110 sind derart versetzt und übereinander dargestellt, dass die Glaskörper 50 dann in dichtester Packung aufeinanderliegen, wenn die Glaskörperlagen 110 zur Bildung eines Bündels 100 aufeinander abgelegt werden, wie dies in Figur 5b zu sehen ist.

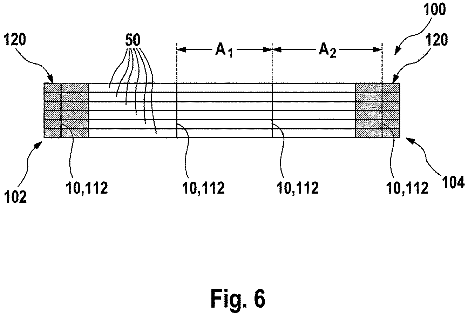

In der Figur 6 ist eine Draufsicht auf das in Figur 5b gezeigte Glaskörperbündel 100 dargestellt. Das Glaskörperbündel 100 weist vier Abstandsmittelpositionen 112 auf, in denen jeweils ein Faden 10 angeordnet ist. Die Abstände A₁ bzw. A₂ zwischen den Abstandsmittelpositionen 112 betragen beispielsweise 40 cm bzw. 50 cm bei einer Glaskörperlänge von beispielsweise 2 m. Die beiden Enden 102, 104 des Glaskörperbündels 100 weisen eine Umhüllung 120, z. B. aus Schrumpffolie, auf.

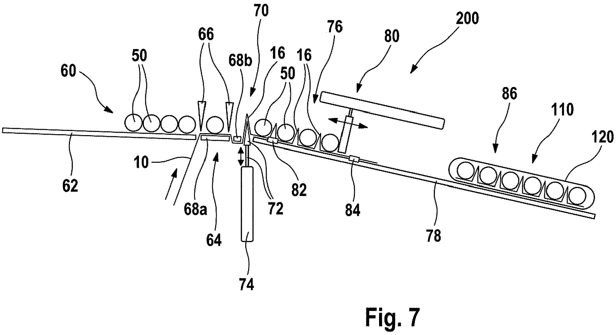

In der Figur 7 ist eine erste Verpackungsvorrichtung 200 in Seitenansicht dargestellt, mit der Glaskörperlagen 110 gemäß der Figuren 1 bis 6 mit Einzelfäden 10 als Abstandsmittel hergestellt werden. Die Glaskörper 50 werden in einer Zuführstation 60, die über eine erste schiefe Ebene 62 verfügt, zugeführt und am unteren Ende der ersten schiefen Ebene 62 vereinzelt. In der dort befindlichen Vereinzelungsstation 64 sind zwei Vereinzelungswerkzeuge 66 beabstandet vorgesehen, die von oben zwischen die ankommenden Glaskörper 50 gefahren werden, damit diese voneinander getrennt werden. An den vorgesehenen Abstandsmittelpositionen 112 werden von unten Fäden 10 mittels jeweils zwei Fadenumlenkelementen 68a, b zugeführt, so dass der vereinzelte Glaskörper 50, der sich zwischen den Vereinzelungswerkzeugen 66 befindet, zunächst auf den Fäden 10 aufliegt.

An die Vereinzelungsstation 64 schließt sich eine Schlaufenstation 70 an, in der mittels Schlaufenbildnern 72, die ebenfalls in allen Abstandsmittelpositionen 112 entlang der Glaskörper 50 angeordnet sind, zwischen zwei benachbarten Glaskörpern 50 Schlaufen 16 hergestellt werden.

Die Schlaufenbildner 72 werden von sogenannten Pushzylindern 74 auf und ab bewegt, so dass bei der Aufwärtsbewegung der jeweilige Faden 10 erfasst und eine Schlaufe 16 gebildet wird, aus der sich der Schlaufenbildner 72 anschließend durch eine Abwärtsbewegung entfernt. Die Schlaufen 16 sind nur schematisch dargestellt.

Die Glaskörper 50 mit den Schlaufen 16 werden auf einer zweiten schiefen Ebene 78 einer Lagenbildnerstation 76 gesammelt, wo eine Fadenbremse 82 vorgegeben ist, die ein Verrutschen der Schlaufen 16 verhindert.

Der erste Glaskörper 50 einer Glaskörperlage 110 wird mittels einer sich mitbewegenden Stoppeinrichtung 80 so lange abgestoppt, bis eine vollständige Glaskörperlage 110 hergestellt worden ist. Die schiefe Ebene 78 bewirkt ein Zusammenrutschen der Glaskörper 50, bis die in Figur 4 dargestellte Anordnung erreicht ist. Mittels eines Fadenschneiders 84 werden die Fäden 10 der fertigen Glaskörperlage 110 durchtrennt. In einer nachfolgenden Umhüllungsstation 86 werden die beiden Enden der Glaskörperlage 110 mit einer Umhüllung 120 versehen, um die Glaskörperlage 110 zu stabilisieren.

In einem weiteren Schritt, der nicht dargestellt ist, werden die so hergestellten Glaskörperlagen 110 zu einem Glaskörperbündel 100 (siehe Figur 5b) aufeinandergestapelt, nochmals mit einer Umhüllung 120 an den Enden 102, 104 versehen und anschließend mittels einer Transporteinrichtung abtransportiert.

Beim Kunden werden die Glaskörper 50 der Glaskörperbündel 100 vereinzelt, wobei zunächst die Umhüllungen 120 an den Enden der Glaskörperbündel 100, dann die Umhüllungen 120 an den Enden der Glaskörperlagen 110 und schließlich auch die Fäden 10 zwischen den Glaskörpern 50 entfernt werden. Die Fäden lassen sich auf einfache Weise durch Herausziehen aus den Glaskörperlagen 110 entfernen.

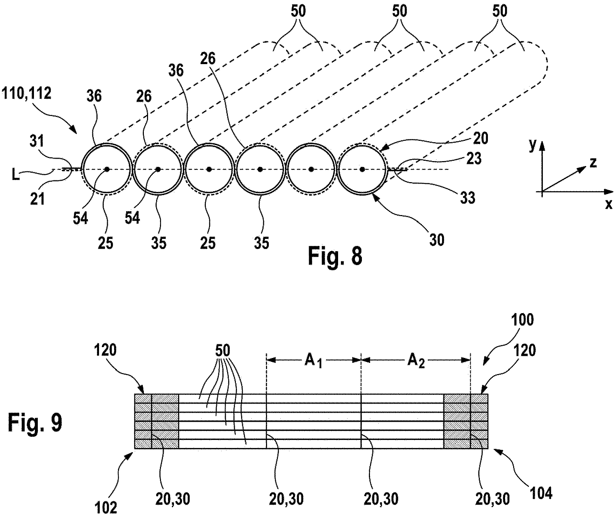

In der Figur 8 ist eine perspektivische Darstellung einer Glaskörperlage 110 gemäß einer zweiten Ausführungsform dargestellt. Auch in dieser Ausführungsform sind mehrere Glaskörper 50 in x-Richtung nebeneinander angeordnet, wobei die Mittelpunkte 54 der Glaskörper 50 ebenfalls auf einer Linie L angeordnet sind, die sich parallel zur x-Achse erstreckt.

In der Figur 8 ist wie in Figur 3 eine beispielhafte Abstandsmittelposition 112 dargestellt. Bei dieser Ausführungsform sind als Abstandsmittel zwei Fäden 20 und 30 in Abstandsmittelpositionen 112 vorgesehen, wobei der Faden 20 gestrichelt und der Faden 30 als durchgezogene Linie eingezeichnet sind. Jeder Faden 20, 30 umschlingt alle Glaskörper 50, wobei sich obere Umschlingungen 26, 36 und untere Umschlingungen 25, 35 jeweils abwechseln. Hierbei sind obere Umschlingungen 26 des ersten Fadens 20 jeweils mit unteren Umschlingungen 35 des zweiten Fadens 30 und umgekehrt kombiniert. Im Bereich der Linie L gehen die oberen Umschlingungen 26, 36 in untere Umschlingungen 25, 35 bzw. untere Umschlingungen 25, 35 in obere Umschlingungen 26, 36 über. Die Enden 21 und 31 sowie die Enden 23 und 33 der Fäden 20 und 30 können z. B. mittels Knoten, thermisches Verschweißen oder Verkleben miteinander verbunden sein.

In der Figur 9 ist die Draufsicht auf ein Glaskörperbündel 100 dargestellt. Wie in Figur 6 erläutert, sind auch bei dieser Glaskörperlage 110 vier Abstandsmittelpositionen 112 mit Abständen A₁ bis A₂ vorgesehen. An den Enden 102, 104 des Glaskörperbündels 100 ist eine Schrumpffolie 120 aufgebracht.

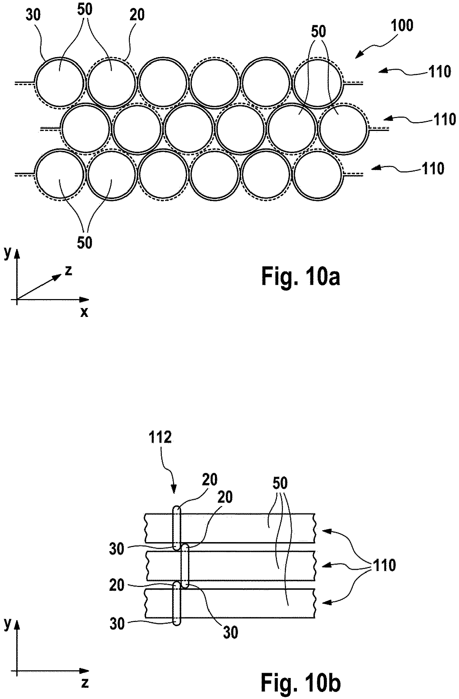

In den Figuren 10a und 10b ist schematisch eine Stirnseite bzw. eine Seitenansicht eines Glaskörperbündels 100 mit drei Glaskörperlagen 110 dargestellt. Auch in dieser Ausführungsform befinden sich die Glaskörper 50 in dichtester Packung.

In der Figur 10b ist ein Ausschnitt einer Draufsicht in x-Richtung auf das in Figur 10a gezeigte Glaskörperbündel 100 dargestellt. Die Glaskörperlagen 110 sind in z-Richtung geringfügig versetzt zueinander angeordnet, so dass die Fäden 20, 30 der einzelnen Glaskörperlagen 110 nebeneinanderliegen. Dies hat den Vorteil, dass sich die Glaskörperlagen 110 in den Abstandsmittelpositionen 112 jeweils über zwei Fäden 20, 30 gegenseitig abstützen.

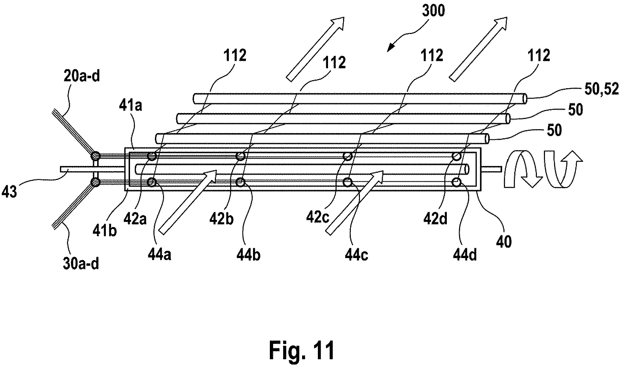

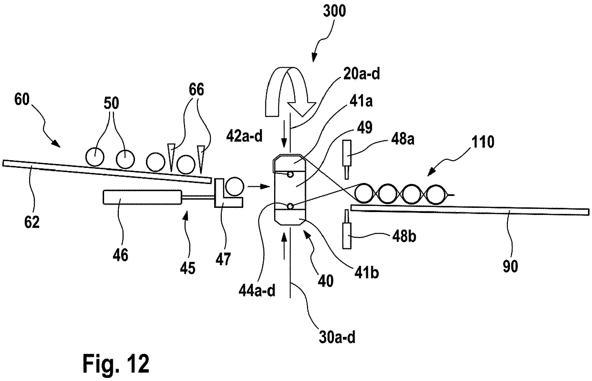

In den Figuren 11 und 12 ist eine Verpackungsvorrichtung 300 zur Herstellung einer Glaskörperlage 110 gemäß der zweiten Ausführungsform dargestellt.

Diese Vorrichtung 300 weist gemäß Figur 11 einen Webrahmen 40 mit Webbalken 41a, 41b auf, an denen Fadenführungsösen 42a bis d, 44a bis d an den vorgegebenen Abstandsmittelpositionen 112 angeordnet sind.

Die ersten und zweiten Fäden 20a bis d, 30a bis d werden von der Seite dem Webrahmen 40 zugeführt und in die Fadenführungsösen 42a bis d, 44a bis d eingeführt.

Der Webrahmen 40 ist drehbar angeordnet und wird mittels einer Antriebswelle 43 zum Ausführen einer alternierenden Vor- und Rückwärtsrotation angetrieben, wodurch die Fäden 20a bis d, 30a bis d nacheinander die zugeführten Glaskörper 50 umschlingen.

In der Figur 12 ist diese Verpackungsvorrichtung 300 in Seitenansicht zu sehen, wobei die dem Webrahmen 40 vor- und nachgeschalteten Einrichtungen ebenfalls eingezeichnet sind.

Die Glaskörper 50 werden in einer Zuführstation 60, die über eine schiefe Ebene 62 verfügt, zugeführt, und am unteren Ende der schiefen Ebene 62 vereinzelt. In der dort befindlichen Vereinzelungsstation 64 sind zwei Vereinzelungswerkzeuge 66 vorgesehen, die von oben zwischen die ankommenden Glaskörper 50 gefahren werden, damit diese voneinander getrennt werden.

Nach der Vereinzelung wird der jeweilige Glaskörper 50 mit einem Schieber 45, der eine Auflage 47 für den Glaskörper 50 und einen Betätigungszylinder 46 aufweist, in den Zwischenraum 49 zwischen die Webbalken 41a und b des Webrahmens 40 gebracht.

Im Webrahmen 40 kann der Glaskörper 50 nicht gehalten werden. Bei der dargestellten horizontalen Anordnung der Zuführstation 60 wird der Glaskörper 50 mittels des beweglichen Schiebers 45 durch den Webrahmen 40 hindurch geschoben.

Bei der auch möglichen vertikalen Anordnung fällt der Glaskörper 50 frei durch den Webrahmen 40 hindurch. In beiden Fällen wird der Glaskörper 50 durch die V-förmig aufgespannten Fäden 20a bis d, 30a bis d sicher geführt. Die freie Bewegung des Glaskörpers 50 wird durch die über Kreuz aufgespannten Fäden gestoppt, bevor der Glaskörper 50 zum Kontakt mit dem vorhergehenden Glaskörper 50 kommt.

Danach wird der Schieber 45 zurückgezogen und der Webrahmen 40 führt eine 180°-Drehung aus. Anschließend wird der nächste Glaskörper 50 in den Zwischenraum 49 gebracht. Der Webrahmen 40 führt dann eine 180°-Drehung in die entgegengesetzte Drehrichtung aus. Auf diese Weise werden nacheinander die einzelnen Glaskörper 50 mit den beiden Fäden 20a bis d, 30a bis d umschlungen. Nach dem Umschlingen der Glaskörper 50 werden die Glaskörper 50 von der Transporteinrichtung 90 aufgenommen.

Wenn die für eine Glaskörperlage 110 erforderliche Anzahl von Glaskörpern 50 mit Fäden 20a bis d, 30a bis d umschlungen ist, werden mittels eines Heißstempels 48, der aus einem Oberteil 48a und einem Unterteil 48b besteht, die Fäden 20a bis d mit den Fäden 30a bis d verschweißt und gleichzeitig abgetrennt. Die so hergestellte Glaskörperlage 110 wird mittels einer Transporteinrichtung 90 abtransportiert.

Während des Verschweißens und Abtrennens der Fäden 20a bis d, 30a bis d erfolgt gleichzeitig auch ein Verschweißen der Fäden 20a bis d, 30a für den Beginn des Herstellungsverfahrens der nächsten Glaskörperlage 110.

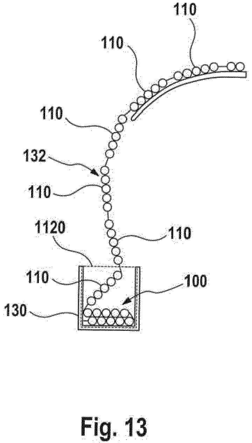

In der Figur 13 wird das Herstellen eines Glaskörperbündels 100 dargestellt. Die einzelnen Glaskörperlagen 110 werden nicht voneinander getrennt, wie dies im Zusammenhang mit den Figuren 9 und 10 erläutert wurde. Ein Band 132 aus Glaskörperlagen 110 wird einem u-förmigen Container 130 zugeführt, in dem das Band 132 gefaltet abgelegt wird, so dass die einzelnen Glaskörperlagen 110 in dichtester Packung aufeinanderliegen. Wenn der Container 130 gefüllt ist und somit ein Glaskörperbündel 100 fertiggestellt ist, wird das Band 132 zwischen zwei Glaskörperlagen 110 getrennt. Das Glaskörperbündel 100 wird an beiden Enden mit einer Umhüllung 120 versehen und anschließend aus dem Container 130 entnommen.

### Bezugszeichenliste

- 10: Faden, fadenförmiges Element
- 11: erstes Ende
- 12: erster Verbindungsabschnitt
- 13: zweites Ende
- 14: zweiter Verbindungsabschnitt
- 15: Umschlingung
- 16: Schlaufe
- 17: erster Schlaufenabschnitt
- 18: zweiter Schlaufenabschnitt
- 19: dritter Schlaufenabschnitt

- 20: erster Faden, fadenförmiges Element
- 20a, b, c, d: erster Faden, fadenförmiges Element
- 21: erstes Ende
- 23: zweites Ende
- 25: untere Umschlingung
- 26: obere Umschlingung

- 30: zweiter Faden, fadenförmiges Element
- 30a, b, c, d: zweiter Faden, fadenförmiges Element
- 31: erstes Ende
- 33: zweites Ende
- 35: untere Umschlingung
- 36: obere Umschlingung

- 40: Webrahmen
- 41a: Webbalken
- 41b: Webbalken
- 42a, b, c, d: Fadenführungsöse für ersten Faden
- 43: Antriebswelle
- 44a, b, c, d: Fadenführungsöse für zweiten Faden
- 45: Schieber
- 46: Betätigungszylinder
- 47: Auflage
- 48: Heißstempel
- 48a: Oberteil
- 48b: Unterteil
- 49: Zwischenraum

- 50: Glaskörper
- 52: außenliegender Glaskörper
- 54: Mittelpunkt des Glaskörpers

- 60: Zuführstation für Glaskörper
- 62: erste schiefe Ebene
- 64: Vereinzelungsstation
- 66: Vereinzelungswerkzeug
- 68a, b: Fadenumlenkelement

- 70: Schlaufenstation
- 72: Schlaufenbildner
- 74: Pushzylinder
- 76: Lagenbildnerstation
- 78: zweite schiefe Ebene

- 80: Stoppeinrichtung
- 82: Fadenbremse
- 84: Fadenschneider
- 86: Umhüllungsstation

- 90: Transporteinrichtung
- 100: Glaskörperbündel
- 102: Ende des Glaskörperbündels
- 104: Ende des Glaskörperbündels

- 110: Glaskörperlage
- 112: Abstandsmittelposition

- 120: Umhüllung

- 130: Container
- 132: Band aus Glaskörperlagen

- 200: erste Verpackungsvorrichtung

- 300: zweite Verpackungsvorrichtung

- A₁: Abstand der Abstandsmittelposition
- A₂: Abstand der Abstandsmittelposition
- L: Linie, die durch die Mittelpunkte der Glaskörper verläuft
- S: Fadenstärke

## Patentansprüche

1. Glaskörperlage (110) mit mindestens zwei Glaskörpern (50), die in einer x-Richtung nebeneinander angeordnet sind und die sich in eine z-Richtung erstrecken,
und mit zwischen den Glaskörpern (50) angeordneten Abstandsmitteln, die in z-Richtung längs der Glaskörper (50) in mindestens zwei beabstandeten Abstandsmittelpositionen (112) vorgesehen sind,
**dadurch gekennzeichnet,**
**dass** die Abstandsmittel fadenförmige Elemente (10, 20, 30) sind, und
**dass** in jeder Abstandsmittelposition (112) mindestens ein fadenförmiges Element (10, 20, 30) vorgesehen ist.

2. Glaskörperlage (110) nach Anspruch 1, **dadurch gekennzeichnet,**
**dass** das fadenförmige Element (10, 20, 30) alle Glaskörper (50) der Glaskörperlage (110) jeweils mindestens teilweise umschlingt.

3. Glaskörperlage (110) nach Anspruch 1 oder 2, **dadurch gekennzeichnet, dass** in jeder Abstandsmittelposition (112) ein fadenförmiges Element (10) vorgesehen ist., wobei bevorzugt das fadenförmige Element (10) in jeder Abstandsmittelposition (112) derart angeordnet ist,
dass das fadenförmige Element (10) alle Glaskörper (50) an der gleichen Außenumfangsfläche umschlingt und Umschlingungen (15) bildet und
dass zwischen zwei benachbarten Glaskörpern (50) jeweils eine Schlaufe (16) vorgesehen ist wobei besonders bevorzugt sich die Schlaufe (16) in y-Richtung über eine Linie L hinauserstreckt, welche die Mittelpunkte (54) der Glaskörper (50) verbindet und/oder wobei besonders bevorzugt die Schlaufe (16) einen ersten aufragenden Schlaufenabschnitt (17) und einen zweiten aufragenden Schlaufenabschnitt (18) aufweist, die über einen dritten Schlaufenabschnitt (19) miteinander verbunden sind, wobei vorzugsweise die ersten und zweiten Schlaufenabschnitte (17, 18) in z-Richtung versetzt angeordnet sind.

4. Glaskörperlage (110) nach einem der Ansprüche 1 bis 3, **dadurch gekennzeichnet, dass** das fadenförmige Element (10) ein erstes Ende (11) und ein zweites Ende (13) aufweist, wobei die Enden (11, 13) jeweils über einen Verbindungsabschnitt (12, 14) mit der jeweils letzten Umschlingung (15) verbunden sind, wobei bevorzugt die Verbindungsabschnitte (12, 14) auf der Oberseite der Glaskörperlage (110) abgelegt sind und sich in x-Richtung über die Glaskörperlage (110) erstrecken.

5. Glaskörperlage (110) nach Anspruch 1 oder 2, **dadurch gekennzeichnet, dass** in jeder Abstandsmittelposition (112) ein erstes fadenförmiges Element (20, 20a, b, c, d) und ein zweites fadenförmiges Element (30, 30a, b, c, d) vorgesehen sindwobei bevorzugt jedes der beiden fadenförmigen Elemente (20, 20a, b, c, d, 30, 30a, b, c, d) alle Glaskörper (50) abwechselnd oben und unten umschlingt und/oder wobei die Glaskörper (50) alternierend
vom ersten fadenförmigen Element (20, 20a, b, c, d) oben umschlungen sind, wodurch obere Umschlingungen (26) gebildet werden, und vom zweiten fadenförmigen Element (30, 30a, b, c, d) unten umschlungen sind, wodurch untere Umschlingungen (35) gebildet werden, und
vom ersten fadenförmigen Element (20, 20a, b, c, d) unten umschlungen sind, wodurch untere Umschlingungen (25) gebildet werden, und vom zweiten fadenförmigen Element (30, 30a, b, c, d) oben umschlungen sind, wodurch obere Umschlingungen (36) gebildet werden wobei vorzugsweise jedes fadenförmige Element (20, 20a, b, c, d, 30, 30a, b, c, d) ein erstes Ende (21, 31) und ein zweites Ende (23, 33) aufweist, wobei die ersten Enden (21, 31) und die zweiten Enden (23, 33) jeweils miteinander verbunden sind wobei weiter vorzugsweise die Enden (21, 23, 31, 33) mittels thermischem Verschweißen, Verkleben oder mechanischer Verbindungsmittel miteinander verbunden sind.

6. Glaskörperlage (110) nach einem der Ansprüche 1 bis 5, **dadurch gekennzeichnet, dass** das fadenförmige Element (20, 30, 40) eine Fadenstärke S aufweist, wobei 0,25 mm ≤ S ≤ 2,5 mm beträgt und/oder

7. Glaskörperlage (110) nach einem der Ansprüche 1 bis 6, **dadurch gekennzeichnet, dass** das fadenförmige Element (10, 20, 30) aus einem Kunststoffmaterial besteht.

8. Glaskörperlage (110) nach Anspruch 7, **dadurch gekennzeichnet, dass** das Kunststoffmaterial Polypropylen (PP), Polyethylen, insbesondere hochdichtes Polyethylen (HDPE), Polyethylenwachs, Polyamid (PA), Styrol-Acrylnitril-Copolymer (SAN), Polyester, Polyethylenterephthalat (PET), Polybutylenterephthalat (PBT), Polyurethan (PU), Acrylnitril-Butadien-Styrol-Copolymer (ABS), Polyetheretherketon (PEEK) und/oder Polycarbonat (PC) aufweist oder aus den genannten Polymeren besteht.

9. Glaskörperlage (110) nach einem der Ansprüche 1 bis 8, **dadurch gekennzeichnet, dass** die Glaskörper (50) Glasrohre und/oder Glasstäbe sind.

10. Glaskörperlage (110) nach einem der Ansprüche 1 bis 9, **dadurch gekennzeichnet, dass** die Abstandsmittelpositionen (112) in Abständen A₁, A₂ mit Werten zwischen 20 cm und 80 cm angeordnet sind.

11. Glaskörperbündel (100) mit mindestens zwei in y-Richtung übereinander angeordneten Glaskörperlagen (110) gemäß der Ansprüche 1 bis 10, **dadurch gekennzeichnet, dass** die Glaskörperlagen (110) derart angeordnet sind, dass die Glaskörper (50) in dichtester Packung angeordnet sind.

12. Glaskörperbündel (100) nach Anspruch 11, **dadurch gekennzeichnet, dass** das Glaskörperbündel (100) mindestens an den Enden (102, 104) eine Umhüllung (120) aufweist.

13. Glaskörperbündel nach Anspruch 12, **dadurch gekennzeichnet, dass** die Umhüllung (120) aus einer Schrumpffolie besteht.

14. Verfahren zur Herstellung einer Glaskörperlage (110) mit mindestens zwei Glaskörpern (50), die in einer x-Richtung nebeneinander angeordnet sind und die sich in eine z-Richtung erstrecken, mit folgenden Schritten in folgender Reihenfolge:
a) Bereitstellen von mindestens zwei Glaskörpern (50),
b) kontinuierliches Zuführen der Glaskörper (50) und Vereinzeln der Glaskörper (50) in einer Vereinzelungsstation (64),
c) kontinuierliches Zuführen von jeweils einem fadenförmigen Element (10) an mindestens zwei vorgegebenen Abstandsmittelpositionen (112) zu dem vereinzelten Glaskörper (50),
d) Umschlingung des vereinzelten Glaskörpers (50) an den vorgegebenen Abstandsmittelpositionen (112) mit den fadenförmigen Elementen (10) unter Ausbildung von Schlaufen (16) zwischen den vereinzelten Glaskörpern (50),
e) Abtrennen der fadenförmigen Elemente (10) nach dem Umschlingen des letzten Glaskörpers (50) einer Glaskörperlage (110),
f) Verarbeitung der Enden (11, 13) der fadenförmigen Elemente (10),
g) Abtransport der Glaskörperlage (110).

15. Verfahren zur Herstellung einer Glaskörperlage (110) mit mindestens zwei Glaskörpern (50), die in einer x-Richtung nebeneinander angeordnet sind und die sich in eine z-Richtung erstrecken, mit folgenden Schritten in folgender Reihenfolge:
a) Bereitstellen von mindestens zwei zylindrischen
Glaskörpern (50),
b) kontinuierliches Zuführen der Glaskörper (50) und Vereinzeln der Glaskörper (50) in einer Vereinzelungsstation (64),
c) kontinuierliches Zuführen von jeweils einem ersten fadenförmigen Element (20) und einem zweiten fadenförmigen Element (30) an mindestens zwei vorgegebenen Abstandsmittelpositionen (112) zu dem vereinzelten Glaskörper (50),
d) alternierendes Umschlingen der Glaskörper (50) in den Abstandsmittelpositionen (112) mittels der jeweils ersten und zweiten fadenförmigen Elemente (20, 30),
e) Abtrennen der fadenförmigen Elemente (20, 30) nach dem Umschlingen des letzten Glaskörpers (50) einer Glaskörperlage (110),
f) Verarbeitung der Enden (11, 13) der fadenförmigen Elemente (20, 30) und
g) Abtransport der Glaskörperlage (110).
